(19) Europäisches Patentamt
European Patent Office
Office européen des brevets

(11) EP 1 715 757 B1

(12) **EUROPEAN PATENT SPECIFICATION**

(45) Date of publication and mention
of the grant of the patent:
**16.10.2013 Bulletin 2013/42**

(21) Application number: **05715642.4**

(22) Date of filing: **28.02.2005**

(51) Int Cl.:
*A21D 8/04* (2006.01)          *A23K 1/165* (2006.01)
*A23L 1/015* (2006.01)          *A23L 1/217* (2006.01)
*A21D 13/00* (2006.01)

(86) International application number:
**PCT/EP2005/002159**

(87) International publication number:
**WO 2005/082160 (09.09.2005 Gazette 2005/36)**

(54) **NOVEL FOOD PRODUCTION PROCESS**

NEUES VERFAHREN ZUR LEBENSMITTELHERSTELLUNG

PROCEDE NOUVEAU POUR LA PRODUCTION D'ALIMENTATION

(84) Designated Contracting States:
**AT BE BG CH CY CZ DE DK EE ES FI FR GB GR HU IE IS IT LI LT LU MC NL PL PT RO SE SI SK TR**

(30) Priority: **26.02.2004 EP 04075628**

(43) Date of publication of application:
**02.11.2006 Bulletin 2006/44**

(60) Divisional application:
**11189278.2 / 2 436 272**

(73) Proprietor: **DSM IP Assets B.V.**
**6411 TE Heerlen (NL)**

(72) Inventors:
• **STREEKSTRA, Hugo**
**NL-1017 SP Amsterdam (NL)**
• **EDENS, Luppo**
**NL-3062 JL Rotterdam (NL)**

(74) Representative: **Matulewicz, Emil Rudolf Antonius et al**
**DSM Intellectual Property**
**P.O. Box 130**
**6100 AC Echt (NL)**

(56) References cited:
EP-A- 0 272 025          WO-A-2004/026043
WO-A-2004/030468          WO-A-2004/032648

• ZYZAK D V ET AL: "Acrylamide formation mechanism in heated foods" JOURNAL OF AGRICULTURAL AND FOOD CHEMISTRY, AMERICAN CHEMICAL SOCIETY. WASHINGTON, US, vol. 51, no. 16, 28 June 2003 (2003-06-28), pages 4782-4787, XP002276619 ISSN: 0021-8561

Remarks:
The file contains technical information submitted after the application was filed and not included in this specification

**Description**

The present invention relates to a process for the production of a food product involving at least one heating step. Disclosed are food products obtained by such a process.

Acrylamide has been produced commercially for a number of years. Hence, its toxicological status is well evaluated. Acrylamide is mainly used for the production of polyacrylamide, and the latter compound is used for various applications, such as the production of drinking water, soil stabilization, industrial wastewater treatment, the winning of oil, and laboratory applications.

Acrylamide is considered as probably carcinogenic for animals and humans. In 1991, the Scientific Committee on Food investigated monomeric acrylamide in contact food materials, and it concluded that acrylamide is a genotoxic carcinogen. Bergmark et al. (Chem. Res. Toxicol., 10, 78-84 (1997)) demonstrated that acrylamide is a component in tobacco smoke. This was the first link between the formation of acrylamide and the heating of biological material. Recently, the occurrence of acrylamide in a number of fried and oven-prepared foods was published (Tareke et al., Chem. Res. Toxicol. 13, 517-522. (2000)), causing world-wide concern. Further research revealed that considerable amounts of acrylamide are detectable in a variety of baked, fried and oven-prepared common foods, and it was demonstrated that the occurrence of acrylamide in food was a result of the heating process.

The official limit for acrylamide contamination in food products in the UK has been set at 10 ppb (10 micrograms per kilogram). The values reported in the literature exceed this value in many products, for instance cereals, bread products, coffee, potato chips (French fries), and potato crisps.

A relation between the administered dose of acrylamide and tumor incidence was found in tests in which rats-whose fate was followed for two years- were fed acrylamide via drinking water (Friedman, H.L. et. al., Fundam. Appl. Pharmacol. 85: 154- 168 (1986) ; Johnson et. al., Toxicol. Appl. Pharmacol. 85: 154- 168 (1986) ) . Tareke *et.al*. investigated hemoglobin- bound acrylamide in rats- as N- (2- carbamoylethyl)- valine- in relation to an acrylamide-containing diet. Combining these data, it was calculated that a daily uptake of acrylamide of 1.6 $\mu$g/kg corresponds to a cancer risk of $7*10^{-3}$ for humans from life- long exposure.

A pathway for the formation of acrylamide from amino acids and reducing sugars has been proposed (Mottram et al. Nature 419:448. (2002)). According to this hypothesis, acrylamide is formed during the Maillard reaction. During baking, frying and roasting, Maillard reactions contribute strongly to the color, smell and taste of the product. Associated with the Maillard reactions is the Strecker degradation of amino acids, and a pathway towards acrylamide was proposed. The formation of acrylamide became detectable when the temperature exceeded 120°C, and the highest formation rate was observed at around 170°C. When both asparagine and glucose were present, the highest levels of acrylamide were observed, while glutamine and aspartic acid only gave rise to trace quantities.

The fact that acrylamide is formed mainly from asparagine and glucose may explain the high levels acrylamide in oven-cooked, fried or roasted plant based products such as bread, roast potatoes, French fries, coffee, or potato crisps. Several plant raw materials are known to contain substantial levels of asparagine. Asparagine is the dominant free amino acid in potatoes (940 mg/kg, corresponding to 40% of the total amino-acid content). In wheat flour, asparagine is present at a level of circa 167 mg/kg, corresponding to 14% of the total free amino acid content (Belitz and Grosch, in: Flood Chemistry, Springer, New York, 1999).

Therefore, in the interest of public health, there is an urgent need for food products that have substantially lower levels of acrylamide or, preferably, are devoid of it. In first instance, research activities have been initiated in order to unravel the mechanism of acrylamide formation in food products. So far, the results have not yet led to a satisfactory solution of the problem. Currently, food companies are investigating the possibilities to avoid the formation of acrylamide by lowering the temperature of the oven cooking and roasting processes. However, such adaptations will inherently result in food products with altered taste properties (less Maillard products), or with an altered composition (higher fat content) .

Co- pending patent application WO04/030468 provides a method to prevent acrylamide formation by treatment of an intermediate form of a food product with an enzyme that breaks down amino acids involved in the formation of acrylamide. However, in particular cases this method may be difficult to apply. For instance, the intermediate form may contain a high level of such amino acids, as is the case for the asparagine content of potato- derived products. Such high levels may require processing times that are too long, and the product quality may be compromised by extensive modification of major components. Also, if the intermediate form is a macroscopic fraction or cut of a solid or semi- solid food, it may be impossible to expose the whole supply of the relevant amino acid (s) to the enzyme.

Surprisingly, we have found that it is not necessary to remove or convert all of the relevant amino acid (s), but that it is sufficient to do so in a thin layer at the surface of the product. The removal or conversion of these amino acids is preferably obtained by the addition of a suitable enzyme.

Therefore the present invention provides a process for the production of a food product comprising:

- adding an enzyme to the surface of an intermediate form of the food product,

- and heating at least a part of the intermediate food product to a temperature of 100°C or higher,

whereby the enzyme is capable to modify an amino acid present in the intermediate form of the food product and which amino acid is involved in the formation of acrylamide in absence of the enzyme during the heating of the intermediate food product, wherein the enzyme is an asparaginase obtained from a microorganism selected from the group consisting of *Escherichia, Erwinia, Streptomyces, Pseudomonas, Aspergillus* and *Bacillus* species, wherein the intermediate form of the food product comprises intact edible parts of plants and wherein the enzyme is sprayed in a liquid form to the surface of the product.

In general, the heating of the at least part of intermediate food product takes place after the adding of the enzyme.

An enzyme is used which is capable of modifying a side chain of the amino acid asparagine.

Advantageously the enzyme is added in an amount sufficient to modify an amino acid to such an extent, that 50% less, preferably 70% less, or more preferably 90% less acrylamide is formed during the subsequent heating step, compared with a food product where no enzyme has been added to the intermediate form.

According to the invention, a suitable enzyme is applied to the outside of the food product intermediate. Preferably, the outside of the food product intermediate represents the surface to which the heat of the heating step is applied. We have also found that the diffusion of the suitable enzyme from the outside of the food product intermediate into the interior is sufficient to reduce the levels of the relevant amino acid(s) in the outer layer, hereby effectively reducing the amount of acrylamide formed upon heating.

The term "food" is defined to include both food stuffs for human consumption and food stuffs for animal consumption. Hence the term "food" should be taken to mean "food, pet food or feed" throughout this document.

The thickness of the outer layer of a food product depends on the food product, its preparation and its application. Generally, the outer layer is 3 mm thick, preferably at most 2 mm and most preferably at most 1 mm thick.

Applying a suitable enzyme to the outside of a food product intermediate, has a number of advantages over the existing art. Processing times are shorter, because the enzyme has to diffuse through a thin layer only, and not through the whole product. Less enzyme is needed, because a lower amount of amino acids has to be removed, which results in a cost advantage. Product quality is higher, because the amino acids in the interior are not affected. Finally, the present invention can be used in solid foods.WO 2004/032648 is a publication under Art 54(3-4) EPC which describes a method of preparing a heat-treated product with a low water content from raw material comprising carbohydrate, protein and water.

WO 2004/026043 is a publication under Art 54(3-4) EPC which describes a method for the reduction of acrylamide in foodproducts. Said method pertains to adding an asparagine-reducing enzyme to a food material and heating the food material to form the finished product.

Zyzak DV et. al., 'Acrylamide formation mechanism in heated foods.', Journal of Agricultural and Food Chemistry, Vol. 51, pages 4782-4787, presents a mechanism for the formation of acrylamide and describes removal of asparagine with asparaginase in a microwaved mashed potato product.

The present invention provides a process for the production of a food product involving at least one heating step, comprising adding a suitable enzyme to an intermediate form of said food product prior to said heating step, where said enzyme effectively reduces the level of amino acids involved in the formation of acrylamide during said heating step, and where said enzyme is introduced at the surface of said intermediate form, and/or said heating step is applied to the surface to which said enzyme has been applied, wherein the enzyme is an asparaginase obtained from a microorganism selected from the group consisting of *Escherichia, Erwinia, Streptomyces, Pseudomonas, Aspergillus* and *Bacillus* species, wherein the intermediate form of the food product comprises intact edible parts of plants and wherein the enzyme is sprayed in a liquid form to the surface of the product.

An intermediate form of the food product is defined herein as any form that occurs during the production process that preferably already has the shape and size of the food product that is subjected to the heating step(s). In another sense, it is characteristic of the intermediate form of the food product is that its surface areas are substantially the same as the surface areas of the form of the food product that is subjected to the heating step(s), although it is admissible that additional surface areas are formed after introduction of the enzyme, for instance by cutting, as long as the new surface area constitutes a relatively minor fraction of the total surface are, preferably less than 20% of the total area, more preferably less than 15% of the total area and most preferably less than 10% of the total area.

The intermediate form does not necessarily comprise all the individual raw materials and/or additives and/or processing aids. For example, for the food product French fries, the intermediate forms comprise the raw cut potato slices, the cooked potato slices, and the potato slices after a first industrial frying step (but before subsequent frying steps). Whether, when, or where other components, such as seasonings, flavorings, or other additives, are added, is not relevant with respect to the present invention.

The intermediate form to which the enzyme is applied does not have to be subjected to the heating step directly - additional processing steps may take place between the addition of the enzyme and the heating step.

The food product may be made from at least one raw material that is of plant origin, for example tubers such as potato, sweet potato, or cassava; legumes, such as peas or soy beans; aromatic plants, such as tobacco, coffee or cocoa; nuts; or cereals, such as wheat, rye, corn, maize, barley, groats, buckwheat, rice, or oats. Also food products made from more than one raw material are included in the scope of this invention, for example food products comprising both corn and potato.

A class of food products in which the process according the invention can be suitable, is formed by products comprising intact edible parts of plants, cuts or slices thereof. Examples of this class are fried products made from plant tubers, such as French fries (pommes frites, potato chips) or potato crisps, made from fruits, such as banana or apple chips, or made from stem vegetables, such as asparagus chips.

Raw materials as cited above are known to contain substantial amounts of amino acids that are involved in the formation of acrylamide during the heating step of the production process. Alternatively, these amino acids may originate from other sources than the raw materials, e.g. from protein hydrolysates, such as yeast extracts, meat extracts, soy hydrolysate, casein hydrolysate and the like, or coatings or toppings, such as cheese, semi-solid soy products, or bread crumbs, which may be used as an additive in the food production process.

A preferred production process is the deep-frying of cuts or slices of edible parts from a plant, for instance of thin potato slices to make potato crisps, or of coarse potato cuts to make French fries..

Preferred heating steps are those at which a part of the intermediate food product, in particular the surface of the food product, is exposed to temperatures at which the formation of acrylamide is promoted, for example 100°C or higher, preferably 105°C or higher, more perferably 120°C or higher, or temperatures up to 250°C. The heating step in the process according to the invention may be carried out in ovens, for instance at a temperature between 150-250°C, such as for the baking of bread and other baked products, or in oil such as the frying of French fries, potato crisps, or tofu, for example at 150-200°C.

The enzyme used in the process of the invention is an enzyme capable of modifying the side chains of amino acids that are involved in the formation of acrylamide during the heating step of the production process, in such a way that less acrylamide is formed during this heating step than without treatment with this enzyme. By "enzyme" is meant "one enzyme" as well as "a combination of more than one enzyme". The enzyme is capable of modifying the side chain of at least the amino acid asparagine. The enzyme is capable of modifying the amino acid asparagine, when the asparagine is present as the free amino acid, or when it is bound to other molecules, such as in peptides, proteins, lipoproteins, or glycoproteins.

The enzyme used in the process of the invention belongs to enzyme category EC 3.5.1 (Enzymes acting on Carbon-Nitrogen bonds, other than peptide bonds),particularly to the enzyme category asparaginase (EC 3.5.1.1).).

Preferably, the enzyme preparation used in the process of the invention is derived from a microorganism and obtained by fermentation processes known in the art.

Asparaginase can be obtained from various sources, for example from plants, from animals, or from microorganisms, such as *Escherichia, Erwinia, Streptomyces, Pseudomonas, Aspergillus* and *Bacillus* species. An example of a suitable *Escherichia* strain is *Escherichia coli.* An example of a suitable *Erwinia* strain is *Erwinia chrysanthemi.* Examples of suitable *Streptomyces strains* are *Streptomyces lividans* or *Streptomyces murinus.* Examples of suitable Aspergillus strains are *Aspergillus oryzae*, *Aspergillus nidulans, or Aspergillus niger.* Examples of suitable *Bacillus* strains are *Bacillus alkalophilus, Bacillus amyloliquefaciens, Bacillus brevis, Bacillus circulans, Bacillus coagulans, Bacillus lautus, Bacillus lentus, Bacillus licheniformis, Bacillus megaterium, Bacillus stearothermophilus,* or *Bacillus subtilis.* An example of suitable methods to obtain asparaginase from *Bacillus, Streptomyces, Escherichia* or *Pseudomonas* strains is described in WO03/083043. WO03/083043 does not, however, disclose the use of asparaginase to decrease the amount of acrylamide in food as described in the present invention. Glutaminase enzymes are commercially available from the companies Daiwa Kasei KK and Amano.

Preferably, the enzyme is obtained from food-grade organisms, for example *Aspergillus niger* or *Bacillus subtilis.*

The enzyme is provided in a liquid form, to allow easy dispersion on the surface of the product. Any additives and stabilizers known to be useful in the art to improve and/or maintain the enzyme's activity can be applied. The enzyme contained in a liquid form is applied to the product by spraying.

Following application of the enzyme to the product, a certain processing time is required to allow the enzyme to act before the food is heated, because a substantial reduction of the amino acids capable of generating acrylamide must be obtained, and because the heating step will generally inactivate the enzyme. Generally the processing time will take at most 2 hours, preferably at most 1.5 hour and most preferably at most 1 hour. In general processing times of at least 5 minutes can be reached. Preferably, the processing time is between 10 minutes and 2 hours, more preferably between 15 minutes and 1.5 hours, and most preferably between 20 minutes and 1 hour. It is to be understood that the more enzyme is added a shorter processing time can suffice for the enzyme to reach the desired effect and vice versa.

The food product differs from the food obtained by the process according to WO04/030468 in the following aspect: the food product obtained in the process according to the invention comprises a low amount of acrylamide, but also a high amount of asparagine or glutamine. In contrast, the food obtained according to the process disclosed in this prior art also contains a significantly decreased amount of asparagine or glutamine. This is not desirable from a nutritional view. In the process according to the invention at least 50 % of the amount of asparagine or glutamine is retained in the food product obtainable by the process. Preferably even 60% of the original amount of asparagine or glutamine is present, even more preferably more than 70% and most preferably more than 80%.

## MATERIALS & METHODS

### Acrylamide measurement

### Sample pretreatment

600 mg dried and homogenized sample was extracted using 5 ml of milliQ water. 1 $\mu$g of internal standard $^{13}C_3$ acrylamide in solution (CIL) was added to the extract. After 10 minutes of centrifugation (6000 rpm), 3 ml of the upper layer was brought on an Extreluut-3BT column (Merck). Using 15 ml of ethylacetate, acrylamide was eluted from the column. Ethylacetate was evaporated under a gentle stream of nitrogen, to bring the volume down to approximately 0.5 ml.

### Chromatographic conditions

The ethylacetate solution was analyzed using gas chromatography. Separation was obtained using a CP-Wax 57 (Varian) column (length 25 m, internal diameter 0.32 mm, film 1.2 $\mu$m) and helium as the carrier gas with a constant flow of 5.4 ml/min. Splitless injection of 3 $\mu$l was performed. Oven temperature was kept at 50°C for 1 minute, after which the temperature was increased with 30°C/min to 220°C. After 12 minutes of constant temperature of 220°C the oven was cooled down and stabilized before the next injection.

Detection was performed using on-line chemical ionization mass spectrometry in positive ion mode, with methane as ionization gas. The characteristic ions m/z 72 (acrylamide) and m/z 75 ($^{13}C_3$ acrylamide) were monitored for quantification.

### Used Equipment

|  |  |
| --- | --- |
| GC: | HP6890 (Hewlet Packard) |
| MSD (mass selective detector): | HP5973 (Hewlet Packard) |

### Measurement of asparaginase activity

Asparaginase activity was measured according to Shirfrin et al. (Shirfrin, S, Parrott, C.L., and Luborsky, S.W. (1974), Journal of Biological Chemistry 249, 1445 -1340). The  principle of this enzyme assay is the determination of the released $NH_3$ as a result of asparaginase activity.

In order to measure released $NH_3$, the following pipette schedule was followed:

Solution A: 0.1 M citric acid + 0.2 M $Na_2HPO_4.2$ $H_2O$, pH= 5.5 Solution B: 0.189 M L-asparagine (Sigma)
Solution C: 0.006 M $(NH_4)_2SO_4$ (Merck)
Solution D: 25% (v/v) trichloroacetic acid (Merck)
Solution E: Ammonia Color Reagent (Aldrich)

The solutions for asparaginase activity measurements have to be prepared freshly. In Table 1, the solutions used for the calibration curve (CP = calibration point) are summarized.

*Table 1 Calibration solution schedule*

| Added solution (ml) | CP 1 | CP 2 | CP 3 | CP 4 | Reference enzyme test | Enzyme test |
| --- | --- | --- | --- | --- | --- | --- |
| A | 1 | 1 | 1 | 1 | 1 | 1 |
| B | 0 | 0 | 0 | 0 | 0.2 | 0.2 |
| C | 0 | 0.25 | 0.5 | 1 | 0 | 0 |
| De-ionized water | 1.1 | 0.85 | 0.6 | 0.1 | 0.8 | 0.8 |

(continued)

| Added solution (ml) | CP 1 | CP 2 | CP 3 | CP 4 | Reference enzyme test | Enzyme test |
|---|---|---|---|---|---|---|
| Volume of reaction rate-limiting amount of the enzyme solution | 0 | 0 | 0 | 0 | 0 | 0.1 |

Solutions according to Table 1 were immediately inverted and incubated at 37°C by inversion. After 30 minutes, the reaction was terminated by the addition of 0.1 ml of solution D. For the reference enzyme test, 0.1 ml enzyme solution was added subsequently. The solutions were immediately mixed and centrifuged to remove any precipitate. 0.2 ml of the supernatants were pipetted into tubes containing 4.3 ml de-ionized water and 0.5 ml solution E. These mixtures were immediately mixed, and after 1 minute the $A^{436\,nm}$ was measured for the calibration samples, references and tests. The calibration curve was made as follows:

$$\Delta A^{436\,nm}\text{ calibration point} = A^{436\,nm}\text{ calibration point} - A^{436\,nm}\text{ calibration point 1}$$

A standard curve was prepared by plotting the $\Delta A^{436\,nm}$ of the standard versus the ammonia (NH3) concentration.
The enzyme activity was calculated as follows:

$$\Delta A^{436\,nm}\text{ enzyme test} = A^{436\,nm}\text{ test} - A^{436\,nm}\text{ test reference}$$

The $\mu$moles of $NH_3$ liberated were determined using the standard curve:

$$\text{Units}\,/\,\text{ml} = \frac{\mu\text{moles liberated NH}_3 \times V_s}{V_t \times t_i \times V_e}$$

where:

$V_s$ = Volume reaction solution (in schedule + 0.1 ml solution D); 2.2 ml
$V_t$ = Volume of reaction solution used for second reaction to determine $NH_3$; 0.2 ml
$t_i$ = incubation time in minutes; 30
$V_e$ = volume enzyme sample to be tested; 0.1

$$\text{Specific enzyme activity} = \frac{\text{units/ml enzyme}}{\text{mg protein/ml enzyme}}$$

One unit of asparaginase activity is defined 1 $\mu$mole of $NH_3$ that is liberated from L-asparagine per minute at pH 5.5 at 37°C, unless stated otherwise. Preferably, the asparaginase activity is determined at the pH value of the intended application.

**Materials**

Asparaginase was obtained from *Escherichia coli* (Sigma, having a specific activity of 285 units/mg), or *Aspergillus niger* (see examples for fermentation details).
CSL medium consisted of: 100 g/l Corn Steep Solids (Roquette), 1 g/l $NaH_2PO_4$*$H_2O$, 0.5 g/l $MgSO_4$*$7H_2O$, 10 g/l glucose*$H_2O$, 0.25 g/l Basildon (antifoam) . The ingredients were dissolved in demineralized water, and the pH was adjusted to pH= 5.8 with NaOH or $H_2SO_4$; 100 ml flasks with baffle and foam ball were filled with 20 ml fermentation broth and sterilized for 20 minutes at 120°C, after which 200 $\mu$l of a solution containing 5000 IU/ml penicillin and 5 mg/ml streptomycin was added to each  flask after cooling to room temperature.
CSM medium consisted of: 150 g/l maltose*$H_2O$, 60 g/l Soytone (pepton), 1 g/l $NaH_2PO_4$*$H_2O$, 15 g/l $MgSO_4$*$7H_2O$, 0.08 g/l Tween 80, 0.02 g/l Basildon (antifoam), 20 g/l MES, 1 g/l L- arginine. The ingredients were dissolved in demineralized water and the pH was adjusted to pH= 6.2 with NaOH or $H_2SO_4$; 500 ml flasks with baffle and foam ball were filled with 100 ml fermentation broth and sterilized for 20 minutes at 120°C, after which 1 ml of a solution containing 5000 IU/ml penicillin and 5 mg/ml streptomycin was added to each flask after cooling to room temperature.

## EXAMPLE 1

### Fermentation of *Aspergillus niger*

The asparaginase encoded by the nucleotide sequence provided in co-pending patent application PCT/EP03/14553 was obtained by constructing expression plasmids containing the DNA sequence, transforming an *A. niger* strain with this plasmid, and growing the *Aspergillus niger* strains in the following way.

Fresh spores ($10^6$-$10^7$) of *A. niger* strains were inoculated in 20 ml CSL-medium (100 ml flask, baffle) and grown for 20-24 hours at 34°C and 170 rpm. After inoculation of 5-10 ml CSL pre-culture in 100 ml CSM medium (500 ml flask, baffle), the strains were grown at 34°C and 170 rpm for 3-5 days.

Cell- free supernatants were obtained by centrifugation in 50 ml Greiner tubes (30 minutes, 5000 rpm, 4°C), and all subsequent steps were performed on ice. The supernatants were pre- filtered over a GF/A Whatman Glass microfiber filter (150 mm Ø) to remove the larger particles, adjusted to pH= 5 with 4 N KOH (if necessary) and sterile-filtrated over a 0.2 μm (bottle- top) filter with suction to remove the fungal material. The supernatant fractions were stored at 4°C (or- 20°C) .

## EXAMPLE 2

### Measurement of the *Aspergillus niger* asparaginase content in the ultra-filtrate and asparaginase activity

#### Step 1- Preparation of ultra-filtrates

Supernatant fractions of the cultures as obtained in Example1, were ultra-filtrated to obtain a higher enzyme concentration and to remove low molecular-weight  contaminations that could interfere with the enzymatic activity determinations and the application tests. Ultra-filtrations of 300 ml supernatant were performed in a Millipore Labscale TFF system equipped with a filter with a 10 kDa cut-off.

Depending on their color and volume, the samples were washed 3-5 times with 10-30 ml of cold demineralized water. The final volumes of the enzyme solutions were 10-30 ml, and these solutions are further referred to as "ultra-filtrates".

#### Step 2 - Determination of the asparaginase concentration by $A^{280}$ and HPSEC

The concentration of the *Aspergillus niger* asparaginase in the ultra-filtrate was calculated from the extinction at 280 nm ($A^{280}$) attributable to the asparaginase and the calculated molar extinction coefficient of the asparaginase. Measurement of the $A^{280}$ was performed in a Uvikon XL Secomam spectrophotometer (Beun de Ronde, Abcoude, The Netherlands).

The molar extinction coefficient of an enzyme at 280 nm can be calculated from the number of tyrosine, tryptophan, and cysteine residues per enzyme molecule (S.C. Gill and P.H. von Hippel, Anal. Biochem. 182, 319-326 (1989)). The molar extinction coefficients of these amino acids at 280 nm are 1280, 5690 and 120 $M^{-1}.cm^{-1}$, respectively. The number of tyrosine, tryptophan and cysteïne residues in the *Aspergillus niger* asparaginase of the invention can be deduced from the protein sequences as given in co-pending patent application PCT/EP/03/14553. The calculated extinction coefficient of the *Aspergillus niger* asparaginase is in given Table 2.

*Table 2. Extinction coefficient of A. niger asparaginase*

| # of amino acids | | | Calculated M.W. | Calculated extinction coefficient at 280 nm | |
|---|---|---|---|---|---|
| Trp | Tyr | Cys | (Da) | $M^{-1}.cm^{-1}$ | $(mg/ml)^{-1}.cm^{-1}$ |
| 0 | 9 | 2 | 39584 | 11760 | 0,3 |

The extinction of the ultra-filtrate at 280 nm ($A^{280}$) that is attributable to the asparaginase depends on the purity of the enzyme sample. This purity was determined using HPSEC (High Performance Size Exclusion Chromatography) with a TSK SW-XL column (300*7.8 mm; MW range 10-300 kDa). Elution was performed with a 25 mM sodium phosphate buffer (pH= 6.0), at a flow of 1 ml/min. The injection volume was 5-100 μl. The absorbance was monitored at 280 nm.

The $A^{280}$ in the ultra-filtrate attributable to the asparaginase of the invention, was obtained from the ratio of the peak surface of the asparaginase peak in the chromatogram and the total surface of the peaks absorbing at 280 nm. The asparaginase concentration in the ultra-filtrate was then calculated by multiplying the $A^{280}$ of the ultra-filtrate with this ratio, and dividing by 0.3 (the calculated extinction coefficient). The solution contained 40 mg protein/ml.

**Step 3 - Determination of asparaginase activity**

The *Aspergillus niger* asparaginase solution showed an activity of 40000 U/ml at pH 5.5. Therefore, a specific activity of 1000 units/mg protein can be calculated taking into account the protein content of 40 mg/ml.

**EXAMPLE 3 -** not according to the invention

**Preparation of French fries, and the influence of Aspergillus *niger* asparaginase on the acrylamide level.**

Potatoes (variety Bintje; [sample: *start material*]) were peeled with a knife peeler (Glastra) and cut to strips (Slitmaster) of 50x10x10 mm. Off-shape cuts were discarded. From these cut potatoes, per solution ca. 1600 g French fries were selected. The French fries were blanched (2 min 80°C + 20 min 65°C) and cooled in cold water (1 min). At this moment, a sample was taken from blank [sample: *after blanching*]. After cooling, the French fries were dipped in one of the following solutions in 4.5 L tap water of 35°C:

Table 3.1: Sample treatment during preparation of French fries

| Code | Treatment | Treatment time | Solution in 4.5 L tap water |
|------|-----------|----------------|------------------------------|
| 1 | Blank | 10 min. | 0.5% SAPP ($Na_2H_2P_2O_7$), pH= 5 |
| 2 | 11500 U/L | 10 min. | 0.5% SAPP, 11.25 ml asparaginase solution |
| 3 | 4600 U/L | 10 min. | 0.5% SAPP, 4.5 ml asparaginase solution |
| 4 | 1800 U/L | 10 min. | 0.5% SAPP, 1.8 ml asparaqinase solution |

The asparaginase solution used had a strength of 4600 U/ml. It must be realized that the exact enzyme dosage is not a relevant number, because it is influenced by the ratio between the potatoes and the volume of the soaking solution in this particular method of application. For convenience sake, rather large volume was used, and hence rather large volumetric enzyme dosages were required.

Subsequently, the French fries were dried at 70°C until a weight loss of 13- 15% had occurred, and par- fried in oil (liquid palm fat, Rodi) for 1 min at 180°C in a commercial batch 35- litre fryer (ANBO) . The par- fried French fries were cooled (20 min at 3°C), frozen (20 min at- 30°C) in Pool equipment and stored overnight at- 20°C [sample: *par- fried*] . The next day, 750 g deep- frozen French fries were finish- fried for 3 min at 180°C in a commercial batch 35- litre fryer (ANBO) and pictures were taken.

Then, the color was measured (see later) and a random sample of 20 fries was taken [sample: *finish- fried whole*] . An extra sample was frozen lightly and the crust was separated from the core [samples: *finish- fried crust* and *finish- fried core*] . All samples were frozen quickly with liquid nitrogen, kept deep- frozen and subsequently freeze- dried. The mass of the samples after freezing with liquid nitrogen and after freeze- drying was measured in order to get an indication of the dry matter content.

Table 3.2 shows the results of the dry matter content of the samples, based on mass before and after freeze- drying.

Table 3.2: Dry matter of different samples potato material and French fries

| Code | Treatment | Sample | Dry matter (%) |
|------|-----------|--------|----------------|
| | Peeled potato | start material | 23.4% |
| | Blank before enzyme treatment | after blanching | 18.5% |
| 1 | Blank , 10 min, no enzyme | par-fried | 31.6% |
| | | finish-fried whole | 45.1% |
| | | finish-fried crust | 63.0% |
| | | finish-fried core | 27.4% |
| 2 | 10 min, 11.5 ml enzyme in 4.5 L | par-fried | 32.1% |
| | | finish-fried whole | 47.5% |
| | | finish-fried crust | 66.6% |

(continued)

| Code | Treatment | Sample | Dry matter (%) |
|---|---|---|---|
| 3 | 10 min, 4.5 ml enzyme in 4.5 L | finish-fried core | 27.6% |
| | | par-fried | 30.4% |
| | | finish-fried whole | 45.1% |
| | | finish-fried crust | 65.9% |
| 4 | 10 min, 1.8 ml enzyme in 4.5 L | finish-fried core | 26.2% |
| | | par-fried | 29.6% |
| | | finish-fried whole | 43.3% |
| | | finish-fried crust | 64.4% |
| | | finish-fried core | 25.5% |

It is clear that the enzyme treatment did not significantly influence the dry matter content of the various samples.

The color of the French fries (finish- fried) was determined with the Fries Colour Test (Ferguson, BMA, The Netherlands) . The FCT was calibrated with the Gretag Macbeth color checker Color Rendition Chart. At random, 20 strips were taken from a fried batch and put on a blue plate. The color was determined by computer image analysis of each individual strip and categorized from the USDA color cart with the scale '000', '00', '0', '1', '2', '3' and '4'. Based on the measurement of the individual strips, the (Frying) Colour Index (KLI) was calculated. The scale of the KLI runs from 0 to 6, in which 0 is white yellow and 6 is dark brown. French fries with a KLI- value >4 are considered too dark.

Table 3.3 shows the results of the color index, determined by FCT. There was no systematic influence of the enzyme treatment on color development. With this measurement method, sample 2, 3 and 4 were not significantly different from sample 1. Visual inspection of the samples gave no difference in visual appearance of the samples.

Table 3.3 Colour index (KLI) determined with FCT

| Code | Treatment | FCT |
|---|---|---|
| 1 | blank, 10 min, no enzyme | 2.50 |
| 2 | 10 min, 11.5 ml enzyme in 4.5 L | 2.35 |
| 3 | 10 min, 4.5 ml enzyme in 4.5 L | 2.35 |
| 4 | 10 min, 1.8 ml enzyme in 4.5 L | 2.30 |

The freeze-dried samples were analyzed for their content of the amino acids asparagine, aspartate, glutamine and glutamate, using HPLC, and for acrylamide using the method described earlier.

It was found that the levels of all these amino acids were reduced by the blanching step. Moreover, the concentrations of these amino acids were also lower in the crust samples than in the core of the finish-fried products. In fact, the amino acid concentrations in the core were essentially the same as in the raw potato. In contrast, the treatment with asparaginase showed a dose-dependent conversion of asparagine to aspartate in the crust samples.

Table 3.4: Amino acid and acrylamide levels in the crust of finish-fried French fries

| Code | Treatment | asparagine | aspartate | Acrylamide |
|---|---|---|---|---|
| 1 | blank, 10 min, no enzyme | +++ | + | +++ |
| 2 | 10 min, 11.5 ml enzyme in 4.5 L | +/- | ++ | +/- |
| 3 | 10 min, 4.5 ml enzyme in 4.5 L | + | ++ | + |
| 4 | 10 min, 1.8 ml enzyme in 4.5 L | ++ | + | ++ |

Hence, using asparaginase it has proven possible to obtain French Fries with a very low asparagine concentration in their crust, resulting in much lower levels of acrylamide, while maintaining a high level of amino acids of a virtually unchanged composition in their interior.

It can be concluded that the use of asparaginase in a soaking solution decreases the amount of acrylamide formed in the crust of French fries during a subsequent deep-frying process.

It has been found that the amino acid content of the interior of a French fry was not significantly affected by the complete treatment of blanching, dipping, par-frying, freezing, and finish-frying. Therefore can be concluded that if one were to measure in non-fractionated fries, any change observed in the levels of these amino acids, must be due to changes in the composition of the outer sections, that are going to form the crust after the frying process. Hence, reductions in asparagine or glutamine levels exceeding 30% when measured in the intact fry, must be regarded as highly significant, and sufficient for the purpose of preventing acrylamide formation in the subsequent frying process.

**Claims**

1.  Process for the production of a food product comprising:

    - adding an enzyme to the surface of an intermediate form of the food product,
    - and heating at least a part of the intermediate food product to a temperature of 100°C or higher,

    whereby the enzyme is capable to modify an amino acid present in the intermediate form of the food product and which amino acid is involved in the formation of acrylamide in absence of the enzyme during the heating of the intermediate food product, wherein the enzyme is an asparaginase obtained from a microorganism selected from the group consisting of *Escherichia, Erwinia, Streptomyces, Pseudomonas, Aspergillus* and *Bacillus* species, wherein the intermediate form of the food product comprises intact edible parts of plants and wherein the enzyme is sprayed in a liquid form to the surface of the product.

2.  Process according to claim 1, wherein the intermediate form of the food product comprises cuts or slices from intact edible parts of plants.

3.  Process according to claim 1 or 2, whereby the enzyme is added in an amount sufficient to modify an amino acid to such an extent, that 50% less, preferably 70% less, or more preferably 90% less acrylamide is formed during the subsequent heating step, compared with a food product where no enzyme has been added to the intermediate form.

4.  Process according to any one of claims 1 to 3, whereby the heating of the intermediate food product takes place by applying heat from the outside.

5.  Process according to any one of claims 1 to 4, wherein the food product is a fried product made from plant tubers.

6.  Process according to claim 5, wherein the fried product is French fries or potato crisps.

7.  Process according to any one of claims 1 to 6, wherein the process comprises deep-frying of cuts or slices of edible parts from a plant.

8.  Process according to claim 7, wherein the process comprises deep-frying of thin potato slices to make potato crisps or of coarse potato cuts to make French fries.

9.  Process according to any one of the claims 1 to 8 wherein the food product is made from at least one plant raw material.

10. Process according to claim 9 , wherein the at least one plant material is selected from the group consisting of tubers, legumes, aromatic plants, nuts and cereals, preferably selected from the group consisting potato, sweet potato, cassava, peas, soy beans, tobacco, coffee , cocoa, nuts, wheat, rye, corn, maize, barley, groats, buckwheat, rice, and oats.

11. Process according to claim 9 or 10 wherein the plant raw material is derived from potato.

12. Use of an asparaginase in a process for the production of a food product according to any one of claims 1 - 11.

**Patentansprüche**

1.  Verfahren zur Herstellung eines Nahrungsmittels, das Folgendes umfasst:

    - Zugeben eines Enzyms auf die Oberfläche einer Zwischenform des Nahrungsmittels,
    - sowie Erhitzen von mindestens einem Teil des Nahrungsmittelzwischenprodukts auf eine Temperatur von 100°C oder darüber,

wobei das Enzym fähig ist, eine in der Zwischen-form des Nahrungsmittels vorhandene Aminosäure zu modifizieren, wobei diese Aminosäure während des Erhitzens des Nahrungsmittelzwischenprodukts in Abwesenheit des Enzyms an der Bildung von Acrylamid beteiligt ist, wobei es sich bei dem Enzym um eine Asparaginase handelt, die von einem Mikroorganismus, ausgewählt aus der Gruppe bestehend aus *Escherichia-, Erwinia-, Streptomyces-, Pseudomonas-, Aspergillus* und *Bacillus*-Arten ausgewählt ist, stammt, wobei die Zwischenform des Nahrungsmittels ganze essbare Pflanzenteile umfasst und wobei das Enzym in flüssiger Form auf die Oberfläche des Produkts gesprüht wird.

2. Verfahren nach Anspruch 1, wobei die Zwischenform des Nahrungsmittels Schnittstücke oder Scheiben von ganzen essbaren Pflanzenteilen umfasst.

3. Verfahren nach Anspruch 1 oder 2, wobei das Enzym in einer Menge zugegeben wird, die ausreicht, um eine Aminosäure so zu modifizieren, dass während des darauffolgenden Erhitzungsschritts im Vergleich zu einem Nahrungsmittel, bei dem kein Enzym zu der Zwischenform zugegeben wurde, 50% weniger, vorzugsweise 70% weniger oder stärker bevorzugt 90% weniger Acrylamid gebildet wird.

4. Verfahren nach einem der Ansprüche 1 bis 3, wobei das Erhitzen des Nahrungsmittelzwischenprodukts dadurch erfolgt, dass man Hitze von außen einwirken lässt.

5. Verfahren nach einem der Ansprüche 1 bis 4, wobei es sich bei dem Nahrungsmittel um ein frittiertes Produkt aus Pflanzenknollen handelt.

6. Verfahren nach Anspruch 5, wobei es sich bei dem frittierten Produkt um Pommes frites oder Kartoffelchips handelt.

7. Verfahren nach einem der Ansprüche 1 bis 6, wobei das Verfahren das Frittieren von Schnittstücken oder Scheiben von essbaren Pflanzenteilen umfasst.

8. Verfahren nach Anspruch 7, wobei das Verfahren das Frittieren von dünnen Kartoffelscheiben zur Herstellung von Kartoffelchips oder von dicken Kartoffelschnittstücken zur Herstellung von Pommes frites umfasst.

9. Verfahren nach einem der Ansprüche 1 bis 8, wobei das Nahrungsmittel aus mindestens einem pflanzlichen Rohmaterial hergestellt wird.

10. Verfahren nach Anspruch 9, wobei das mindestens eine Pflanzenmaterial aus der Gruppe bestehend aus Knollen, Leguminosen, aromatischen Pflanzen, Nüssen und Getreiden ausgewählt ist und vorzugweise aus der Gruppe bestehend aus Kartoffel, Süßkartoffel, Cassava, Erbsen, Sojabohnen, Tabak, Kaffee, Kakao, Nüssen, Weizen, Roggen, Mais, Gerste, Grütze, Buchweizen, Reis und Hafer ausgewählt ist.

11. Verfahren nach Anspruch 9 oder 10, wobei das pflanzliche Rohmaterial von der Kartoffel stammt.

12. Verwendung einer Asparaginase in einem Verfahren für die Herstellung eines Nahrungsmittels nach einem der Ansprüche 1 - 11.

**Revendications**

1. Procédé de production d'un produit alimentaire, comprenant :

   - l'addition d'une enzyme à la surface d'une forme intermédiaire du produit alimentaire,
   - et le réchauffement d'au moins une partie du produit alimentaire intermédiaire jusqu'à une température de 100°C ou plus,

   ce par quoi l'enzyme est capable de modifier un acide aminé présent dans la forme intermédiaire du produit alimentaire, lequel acide aminé est impliqué dans la formation d'acrylamide en l'absence de l'enzyme pendant le réchauffement du produit alimentaire intermédiaire, où l'enzyme est une asparaginase obtenue à partir d'un microorganisme sélectionné dans le groupe constitué par les espèces *Escherichia, Erwinia, Streptomyces, Pseudomonas, Aspergillus* et *Bacillus,* où la forme intermédiaire du produit alimentaire comprend des parties comestibles et intactes de plantes et où l'enzyme est pulvérisée sous forme liquide à la surface du produit.

**2.** Procédé selon la revendication 1, dans lequel la forme intermédiaire du produit alimentaire comprend des coupes ou des tranches de parties comestibles et intactes de plantes.

**3.** Procédé selon la revendication 1 ou 2, dans lequel l'enzyme est ajoutée en une quantité suffisante pour modifier un acide aminé à un degré tel que 50% en moins, de préférence 70% en moins, ou plus préférablement 90% en moins d'acrylamide est formé lors de l'étape de réchauffement ultérieure, par rapport à un produit alimentaire pour lequel aucune enzyme n'a été ajoutée à la forme intermédiaire.

**4.** Procédé selon l'une quelconque des revendications 1 à 3, dans lequel le réchauffement du produit alimentaire intermédiaire se produit par l'application de chaleur depuis l'extérieur.

**5.** Procédé selon l'une quelconque des revendications 1 à 4, dans lequel le produit alimentaire est un produit frit à base de tubercules de plantes.

**6.** Procédé selon la revendication 5, dans lequel le produit frit est constitué de pommes frites ou de pommes chips.

**7.** Procédé selon l'une quelconque des revendication 1 à 6, **caractérisé en ce que** le procédé comprend la friture de coupes ou de tranches de parties comestibles d'une plante.

**8.** Procédé selon la revendication 7, **caractérisé en ce que** le procédé comprend la friture de fines tranches de pomme de terre afin de fabriquer des pommes chips ou de coupes de pomme de terre grossières afin de fabriquer des pommes frites.

**9.** Procédé selon l'une quelconque des revendications 1 à 8, dans lequel le produit alimentaire est fabriqué à partir d'au moins une matière première végétale.

**10.** Procédé selon la revendication 9, dans lequel la au moins une matière végétale est sélectionnée dans le groupe constitué par les tubercules, les légumineuses, les plantes aromatiques, les noix et les céréales, de préférence sélectionnée dans le groupe constitué par la pomme de terre, la patate douce, le manioc, les pois, le soja, le tabac, le café, le cacao, les noix, le blé, le seigle, le maïs, l'orge, les gruaux, le sarrasin, le riz et l'avoine.

**11.** Procédé selon la revendication 9 ou 10, dans lequel la matière première végétale est dérivée de la pomme de terre.

**12.** Utilisation d'une asparaginase dans un procédé de production d'un produit alimentaire selon l'une quelconque des revendications 1-11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 04030468 A
- WO 2004032648 A
- WO 2004026043 A
- WO 03083043 A
- EP 0314553 W

### Non-patent literature cited in the description

- **BERGMARK et al.** *Chem. Res. Toxicol.,* 1997, vol. 10, 78-84
- **TAREKE et al.** *Chem. Res. Toxicol.,* 2000, vol. 13, 517-522
- **FRIEDMAN, H.L.** *Fundam. Appl. Pharmacol.,* 1986, vol. 85, 154-168
- **JOHNSON.** *Toxicol. Appl. Pharmacol.,* 1986, vol. 85, 154-168
- **MOTTRAM et al.** *Nature,* 2002, vol. 419, 448
- **BELITZ ; GROSCH.** Flood Chemistry. Springer, 1999
- **ZYZAK DV.** Acrylamide formation mechanism in heated foods. *Journal of Agricultural and Food Chemistry,* vol. 51, 4782-4787
- **SHIRFRIN, S ; PARROTT, C.L. ; LUBORSKY, S.W.** *Journal of Biological Chemistry,* 1974, vol. 249, 1445-1340
- **S.C. GILL ; P.H. VON HIPPEL.** *Anal. Biochem.,* 1989, vol. 182, 319-326